(19) Europäisches Patentamt / European Patent Office / Office européen des brevets

(11) **EP 2 768 359 B1**

(12) **EUROPEAN PATENT SPECIFICATION**

(45) Date of publication and mention
of the grant of the patent:
**06.01.2016  Bulletin 2016/01**

(21) Application number: **12783263.2**

(22) Date of filing: **19.10.2012**

(51) Int Cl.:
***A47J 31/54*** *(2006.01)*

(86) International application number:
**PCT/GB2012/052595**

(87) International publication number:
**WO 2013/057506 (25.04.2013 Gazette 2013/17)**

(54) **FLOW HEATERS**

DURCHLAUFERHITZER

DISPOSITIFS DE CHAUFFAGE À CIRCULATION CONTINUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2011  GB 201118226**

(43) Date of publication of application:
**27.08.2014  Bulletin 2014/35**

(73) Proprietor: **Strix Limited**
**Ronaldsway, Isle of Man IM9 2RG (GB)**

(72) Inventor: **MOUGHTON, Colin Peter**
**Port St Mary**
**Isle of Man IM9 5LQ (GB)**

(74) Representative: **Samuels, Adrian James**
**Dehns**
**St Bride's House**
**10 Salisbury Square**
**London**
**EC4Y 8JD (GB)**

(56) References cited:
**EP-A1- 0 771 542          EP-A1- 1 380 243**
**WO-A2-2008/099322     WO-A2-2010/124942**
**DE-A1-102010 002 438**

## Description

This invention relates to the construction and operation of heaters which heat liquid flowing through them so that the heated liquid can be dispensed while liquid is being heated.

There have been many previous proposals for flow heaters which heat water or other liquids and one particular application has been the use of flow heaters for automated or semi-automated beverage makers. Traditionally, flow heaters were limited in their performance in several respects. In particular, flow heaters could not be used to produce boiling water because of the problems of overheating and spitting caused by localised boiling within the water tube. It was also difficult to regulate the temperature at which water was dispensed as this would depend upon several factors including the precise speed of the pump and the initial temperature of the water in the reservoir. The document EP 0 771 542 discloses a flow heater apparatus.

The Applicant has largely overcome these problems with its previous proposals set forth in its earlier applications WO 2010/106349, WO 2010/106348 and WO 2011/077135. However, the Applicant has now devised further improvements in flow heater technology and when viewed from a first aspect the present invention provides a flow heater apparatus for heating liquid as it flows therethrough comprising: a liquid source; a conduit for conveying liquid from the liquid source towards an outlet, said conduit comprising sequentially at least a first zone and a second zone; heating means for heating liquid in said conduit; and control means for controlling the rate of flow of fluid through said conduit, said control means being in data communication with a first temperature sensor responsive to a temperature of the liquid in the conduit at a point between said first and second zones, a second temperature sensor responsive to a temperature of the liquid upstream of said first temperature sensor and a third temperature sensor responsive to a temperature of the liquid downstream of said first temperature sensor.

It is also disclosed a method of heating liquid flowing through a flow heater apparatus, the method comprising the steps of: conveying liquid from a liquid source through a conduit comprising sequentially a first zone and a second zone, to an outlet; heating said liquid being conveyed through said conduit; sensing a first temperature representative of the temperature of the liquid in the conduit at a first point between said first and second zones, sensing a second temperature representative of the temperature of the liquid upstream of said first point, sensing a third temperature representative of the temperature of the liquid downstream of said first point; and controlling the rate of flow of fluid through said conduit based on at least one of said first, second and third temperatures.

Thus it will be seen by those skilled in the art that in accordance with the invention at least three temperature sensors are provided for sensing the temperature in different parts of the liquid's flow path as it is heated. As will be explained further below, the Applicant has found that this allows good control of both the temperature at which liquid is dispensed at the outlet and of the volume of liquid which is dispensed using an accurate calculation of the flow rate of liquid through the heater. At least in the preferred embodiments, this can be achieved without any requirement to measure the flow rate directly (the sensors for which would add significantly to the cost). Moreover, the Applicant has found that good control of dispensed temperature and volume can be maintained even when the performance of the heater is affected by the build-up of lime-scale in the liquid conduit.

As mentioned above, the temperatures measured by the three sensors can give an indication of outlet temperature and flow rate. More specifically the flow rate can be calculated using the following parameters: the difference between the temperatures measured by the first and second temperature sensors; the heating power applied to the liquid between the points at which the first and second temperature sensors measure temperature; and the specific heat capacity of the liquid being heated - e.g. water. Thus in the preferred set of embodiments, the apparatus is arranged to calculate a flow rate of liquid therethrough using the difference in the temperatures sensed by the first and second temperature sensors respectively and to dispense a predetermined volume of heated liquid using the calculated flow rate.

As well as calculating the flow rate, the temperature sensors can be used to take into account the effects of the build-up of lime-scale in the liquid conduit. More particularly, the difference between the first and second temperatures can be used to predict what the temperature sensed by the third temperature sensor should be based on a knowledge of the heating power provided between the locations sensed by the first and third temperature sensors respectively. This can then be compared with the actual temperature measured by the third temperature sensor to give an indication of the effect of lime-scale build-up which reduces the effective power transmitted into the liquid from the heating means.

The third temperature sensor may sense temperature anywhere downstream of the location where the second temperature sensor senses temperature, although in a preferred set of embodiments it is arranged to sense the temperature of the liquid as it leaves the outlet. This enables the control means to determine whether the correct temperature is being achieved at the outlet and to make adjustments accordingly.

The liquid source could be a mains liquid source or other source into which the apparatus is plumbed. However in one set of embodiments the liquid source comprises a reservoir, e.g. which can be periodically filled by a user. The reservoir could be removable to allow it to be filled directly from a tap.

The second temperature sensor may be arranged to sense temperature anywhere upstream of where the first temperature sensor senses temperature but is preferably arranged to sense the temperature of the liquid in the reservoir from which liquid is drawn before it is heated by the heating means. This allows the control means to control the rate of flow of liquid through the conduit appropriately to achieve the desired outlet temperature since the required flow rate is dependent upon the temperature of the liquid before it enters the conduit.

In a preferred set of embodiments, liquid is made to flow through the conduit, preferably from the liquid source, by means of a pump. However, this is not essential and a gravity feed system, i.e. one in which the hydrostatic pressure of liquid in a raised reservoir provides the necessary flow pressure, could be used instead. The rate of flow of liquid through the conduit could be controlled by a suitable variable valve but where a pump is provided, the flow rate control is preferably exercised by controlling the speed of the pump.

In one set of embodiments, the apparatus is arranged to heat the liquid to a temperature below its boiling point. In these circumstances, and where the third temperature sensor is provided at the outlet as is preferred, the liquid outlet temperature predicted by extrapolating the temperature differential between the first and second sensors will correspond approximately to the actual temperature sensed except for the effect of lime scale build-up.

In another set of embodiments however the apparatus is arranged to heat the liquid to boiling. This is particularly advantageous in the context of a beverage maker intended to provide boiling water for beverages requiring this such as black tea. In these embodiments, the temperature 'predicted' using the differential between the first and second sensors will be higher than the boiling point of the liquid and thus higher than the actual temperature of the liquid dispensed. This is because in order to ensure that the liquid does actually boil, typically the flow rate will be chosen so that the 'predicted' temperature is a few degrees above the boiling point. The additional energy does not of course increase the temperature but rather supplies the latent heat necessary for boiling.

It is not desirable for the 'predicted' temperature to be significantly higher than the boiling point since this results in wasted energy and moreover creates excess steam which can cause problems with back pressure along the conduit. However, as the conduit scales up, the 'predicted' temperature necessary to achieve boil will rise as the effective power of the heater in the scaled-up region reduces. The differential between the 'predicted' temperature and the actual measured temperature is, therefore, as mentioned above, an indicator of the degree of scaling which the conduit has suffered. In a set of embodiments therefore, a threshold 'predicted' temperature is set, above which a scale warning is given. This can act as a reminder to a user to de-scale the apparatus.

As mentioned above, it is necessary to know the power of the heating means provided between the locations at which the first and second temperature sensors sense temperature and also between the locations at which the second and third temperature sensors sense temperature. In the preferred set of embodiments, a single heating element is provided and thus the important parameter becomes the relative proportions of the power of the heating element which is provided upstream and downstream of the sensing location of the first temperature sensor respectively.

The heating element is preferably a sheathed heating element bonded to the outside of the conduit. In one set of embodiments, the heating element is bonded on two sides thereof to respective portions of the conduit, which in the preferred set of embodiments correspond to the first and second zones. The first temperature sensor is thus arranged to sense the temperature of the liquid at the junction between the two zones which could, for example, be a form of connecting loop.

The temperature sensors may take any convenient form. They could be such that they are located remote from where they sense temperature, but preferably the sensors are provided at the locations where they sense the temperature. In a set of preferred embodiments they comprise thermistors, e.g. negative temperature coefficient thermistors. Of course it is not essential that the temperature sensors are all of the same type.

The conduit may extend all the way to the outlet, although in one set of embodiments a zone is provided between the conduit and the outlet which provides for a separate escape path for steam. This feature is described in more detail in WO 2010/106349.

It will be appreciated that although in accordance with the invention the control means controls the rate of flow of fluid through the conduit, e.g. by controlling the speed of the pump, it is not necessary for this control system to be accurately pre-calibrated to deliver a specified value of the flow rate since the flow rate can be determined independently by the measurements of temperature as previously explained. This obviates the need for a high precision pump or the like.

Certain preferred embodiments of the invention will now be described, by way of example only, with reference to the accompanying drawings in which:

Figs. 1 and 2 show isometric views from two sides of a flow heater in accordance with the present invention;

Figs. 3 and 4 show cross-sectional views through the heating chamber of the flow heater shown in Figs. 1 and 2;

Fig. 5 shows the liquid flow channels and the heating element of the flow heater shown in Figs. 1 and 2; and

Figs. 6 and 7 show schematic views of the flow heater displaying the location of three thermistors.

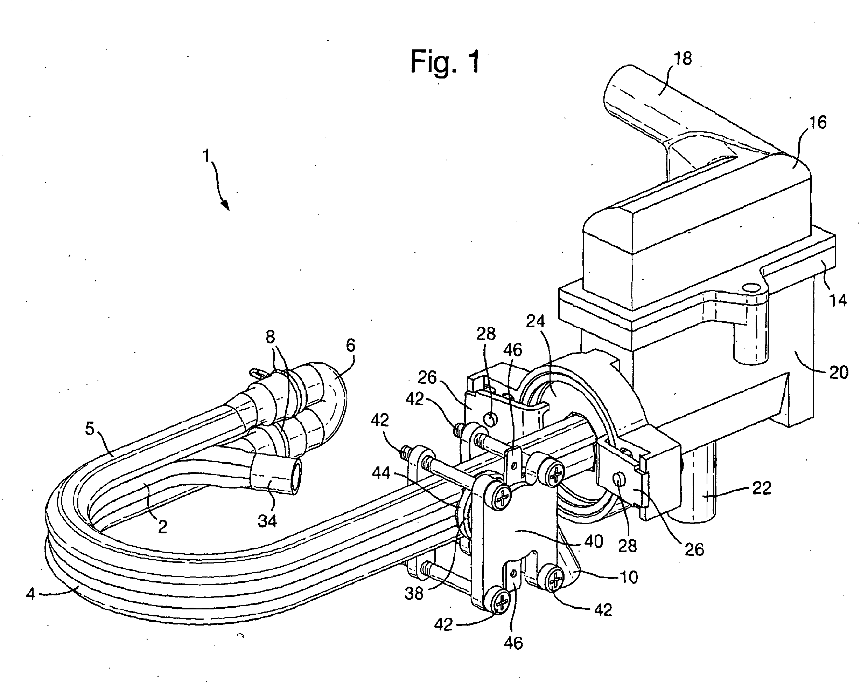

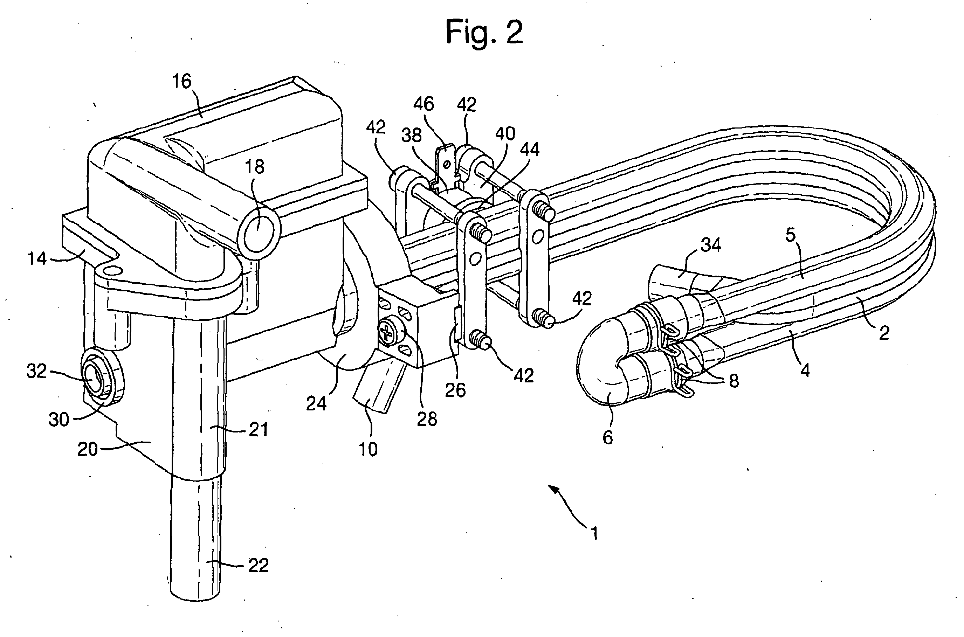

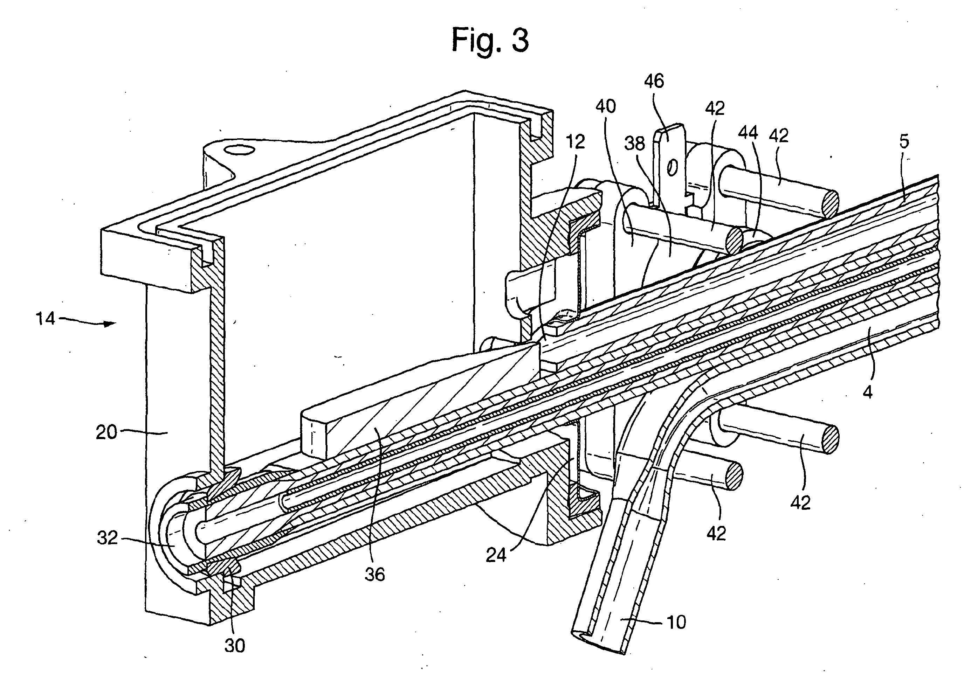

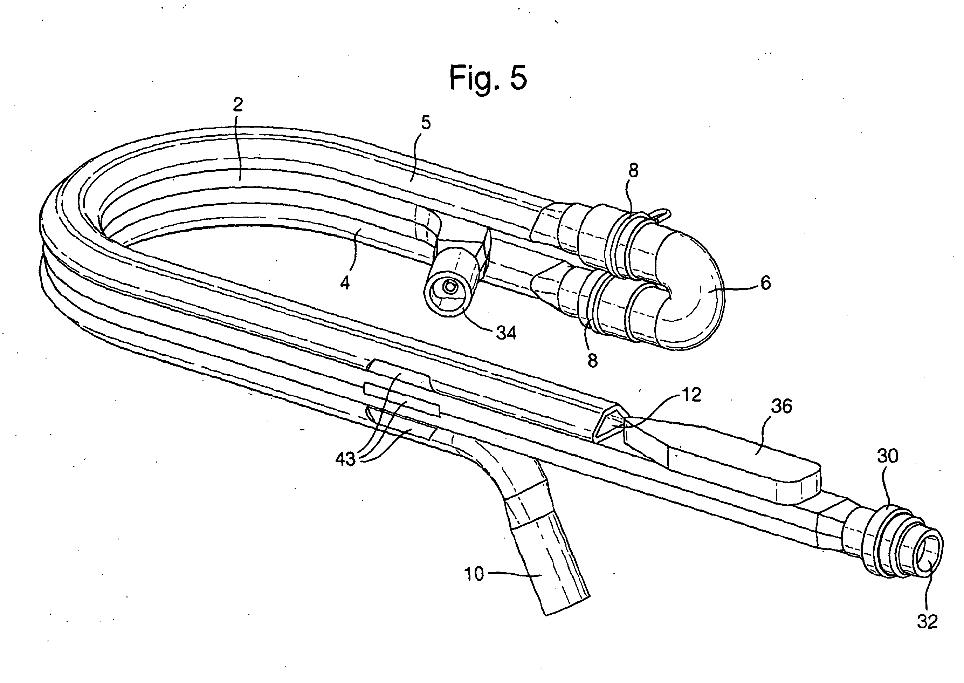

Figs. 1 and 2 show a flow heater 1 in accordance with the invention which can be used to heat water to boiling, e.g. for use in a hot drinks dispenser. The flow heater comprises a length of a sheathed immersion-type heating element 2 which, although not depicted, comprises an aluminium casing and a coiled resistance wire packed in magnesium oxide insulating powder. Arranged on and brazed to opposite sides of the heating element 2 are two aluminium water flow channels 4, 5. At one end of the heating element 2, two adjacent ends of the channels 4, 5 are connected together by means of a plastic tube 6 which is sealed onto the channels 4, 5 by clamps 8 at each end. This creates a flow path for water through the flow heater from an inlet 10 to an outlet 12 (see Figs. 3, 4 and 5) into a heating chamber 14. The heating element 2 and the water flow channels 4, 5 conform closely to one another and are arranged in a J-shape (seen more clearly in Fig. 5), which allows a compact flow heater to be provided for fitting into a small appliance, e.g. a kitchen coffee maker.

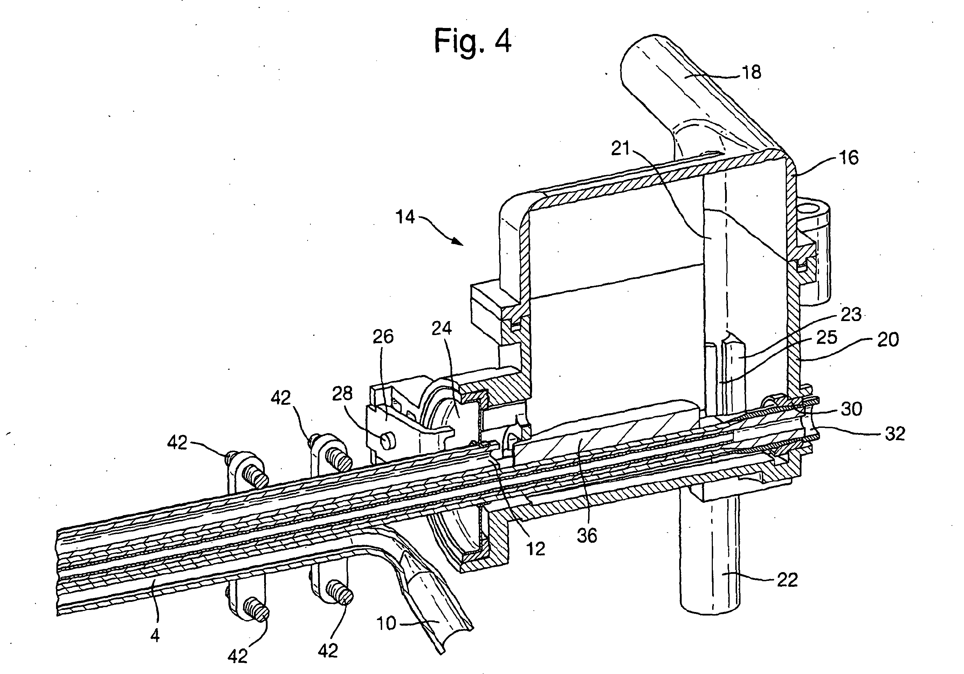

The heating chamber 14, shown also in Figs. 3 and 4, comprises a lid 16 with a steam outlet 18 (omitted in Fig. 3 for clarity), and a main body 20 into which the heating element 2 extends. The steam outlet 18 allows steam to be vented to atmosphere away from the user or to be captured and condensed in a suitable trap, drip tray or the like. The main body 20 of the heating chamber 14 has an overall elongate rectangular shape in which the portion of the heating element 2 inside it occupies the lower portion, although water can pass all the way around it. A sideways extension 21 houses a hot water outlet 22 in its base at the downstream end of the heating chamber 14. The hot water outlet 22 extends vertically up into the main body 20 of the heating chamber 14 just above the height, but offset to the side, of the heating element 2 to form a weir 23. A narrow slit 25 in the weir 23 allows any remaining water in the heating chamber 14 following operation to be drained away.

A sealing flange 24, held in place by a clamp 26 and screws 28, provides a sealed entry for the heating element 2 and the upper channel 5 which project into the main body 20 of the heating chamber 14. The upper channel 5 terminates just inside the heating chamber 14, while the heating element 2 extends across the heating chamber 14 to project through the other side of the main body 20 where it is sealed by a ring seal 30 around its cold tail 32. The cold tail 34 at the other end of the heating element 2 is arranged to project clear of the channels 4, 5 near to the plastic connecting tube 6. This permits electrical connection to be made to the cold tails 32, 34 at both ends of the heating element 2.

The outlet 12 of the upper channel 5 opens into the heating chamber 14 adjacent to a heat sink 36, e.g. an aluminium slug, which is bonded to the top of the portion of the heating element 2 in the heating chamber 14 (shown also in Fig. 5). The heat sink 36 acts as an additional thermal mass for the portion of the heating element 2 which extends into the heating chamber 14.

A bimetallic disc thermostat 38, also known as a half-inch disc, is clamped to the side of the water flow channels 4, 5 and the heating element 2 by a bracket 40 and screws 42. As shown in Fig. 5, a flattened area 43 has been formed on the water flow channels 4, 5 and the heating element 2 to increase the contact area for the thermostat 38 on the flow heater. The thermostat 38 has two terminals 46 that are coupled to switch contacts (not shown) within the thermostat 38 and which are acted on by a bimetallic disc actuator (not shown) which is held in good thermal communication with the conducting face 44 of the thermostat 38. In use, the terminals 46 are connected to a control circuit which can then provide power to or remove power from the heating element 2.

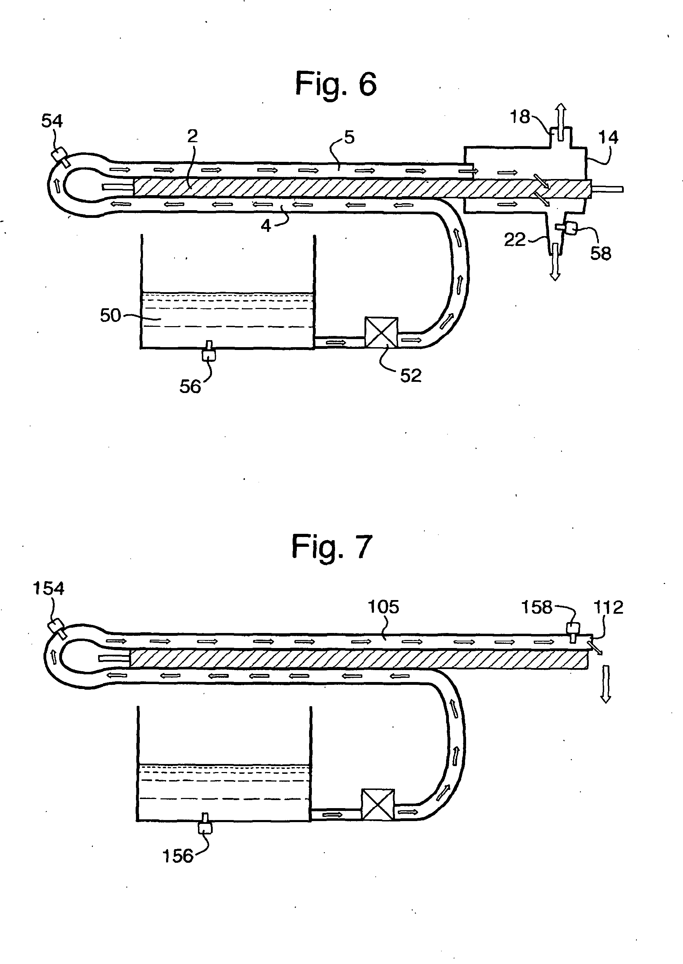

Although not shown in Figs. 1 to 5, the flow heater also comprises a cold water reservoir 50 fluidly connected to the inlet 10 of the lower channel 4 via a pump 52, which is shown schematically in Fig. 6. Three negative temperature coefficient thermistors 54, 56, 58 are located at three different points along the flow heater in order to measure the temperature of the water at these points. A first thermistor 54 projects through the wall of the plastic tube 6 between the lower and upper water flow channels 4, 5. A second thermistor 56 projects through the wall of the reservoir 50, and a third thermistor 58 projects through the hot water outlet 22.

The three thermistors 54, 56, 58 are connected to a control circuit (not shown), which in turn is connected to the pump 52 and the heating element 2.

Operation of the flow heater 1 will now be described with reference to the Figs. 1 to 6.

When a user wishes to dispense water, he/she turns on the flow heater 1 to activate a control circuit (not shown). Initially this activates the heating element 2 by applying electrical power across the cold tails 32, 34 via connections (not shown) to the control circuit. After a delay of typically five seconds (depending on the temperature of the water already in the heater) the pump 52 is operated to pump water in the cold water reservoir 50 to the upstream end of the lower water flow channel 4 through the inlet 10, from where it flows through the plastic connecting tube 6 and into the upper water flow channel 5. In other embodiments the pump 52 may be started before the heating element 2, or both could be started at same time. The pump speed is set by the control circuit dependent on the temperature of the water in the reservoir 50 as measured by the second thermistor 56, and the desired temperature of the water to be dispensed from the appliance, i.e. boiling, also using the power of the heating element 2. For example, if the temperature of the water in the reservoir 50 is colder than usual, the pump speed will be decreased (and vice versa) in order to increase the heating time of the water in the flow heater to ensure that it reaches boiling.

As the water flows through the channels 4, 5 it is heated by the element 2 until it emerges via outlet 12 into the heating chamber 14 at a temperature of approximately 85°C, where it begins to fill this chamber 14. The weir 23 of the hot water outlet 22 which projects upwards into the main body 20 of the heating chamber 14 causes the water level in the heating chamber 14 to rise, thereby covering the exposed portion of the element 2 which extends into the heating chamber 14. The exposed part of the heating element 2 continues to heat the water in the heating chamber 14, during which time localised boiling occurs at the element surface, giving rise to violent movement of the water and large bubbles of steam being generated. However, the steam can easily escape the heating chamber by means of the steam outlet 18 in the lid 16.

When water in the boil pool reaches the level of the top of the weir 23 of the hot water outlet 22 it can then freely flow down the tube and out of the spout of the appliance (not shown) into a user's receptacle. It will be seen therefore that the weir 23 of the outlet tube 22 which is inside the heating chamber 14 acts to maintain a minimum water level inside the heating chamber 14. Since this minimum water level is above the top of the heating element 2, it may be ensured that during normal operation the element 2 remains covered with water and cannot therefore overheat.

In the event of the reservoir running out of water or the appliance being switched on without any water in, the temperature of the element 2 will rise very rapidly. This rapid temperature rise is communicated by means of the conducting face 44 of the thermostat 38 to the bimetallic actuator inside which causes it to operate thereby opening its respective switch contact and interrupting the power supply to the element 2. Thus dangerous overheating and/or damage is prevented. In the event of the element 2 overheating, the heat sink 36 bonded to the exposed portion of the heating element 2 in the heating chamber 14 acts as a heat sink so that this portion of the element 2 does not overheat irreparably.

As well as using the second thermistor 56 to control the speed of the pump, the first and second thermistors 54, 56 are also used to control the volume of heated water dispensed. Using the following relationship, the flow rate of the water through the flow heater 1 is calculated from the measurements of the water temperature using the first and second thermistors 54, 56.

$$m\_dot = R \times Q\_dot/(Cp \times (T_1 - T_2))$$

where:

Q_dot = total power of the heater (in W)
m_dot = mass flow rate (in kg/s)
Cp = specific heat capacity of water (in J/kg/K)
$T_1$, = water temperature (in K) in the plastic tube 6 as measured by the first thermistor 54,
$T_2$ = water temperature (in K) in the reservoir as measured by the second thermistor 56

and R is the ratio of the temperature increase of the water in the lower channel 4 to the temperature increase of the water in the whole heater, which is established during calibration and is given by:

$$R = (T_1 - T_2)/(T_3 - T_2)$$

where $T_3$ = water temperature (in K) at the outlet as measured by the third thermistor 58.

Therefore the pump 52 is operated for the period of time necessary, depending on the calculated flow rate, to dispense the desired amount of water, e.g. 200g.

The first and second thermistors 54, 56 are also used to predict the temperature of the heated water at the hot water outlet 22, i.e. at the location of the third thermistor 58, using the following relationship:

$$T_3\_calc = (T_1 - T_2)/R + T_2$$

where R, $T_1$ and $T_2$ are as defined above, and $T_3\_calc$ is the predicted temperature at the hot water outlet 22.

Calculating this temperature enables the temperature of the water dispensed from the flow heater to be predicted. This enables the pumped flow rate and the power of the element 2 to be matched such that by the time the water leaves the heating chamber 14 by spilling over the top of the hot water outlet 22 it is effectively boiling. This includes an 'over-allowance' of energy input as compared to the energy that would theoretically be required to raise the water temperature to 100 °C to ensure a rolling boil and thus that the water attains a true temperature very close to boiling. For example, the pump speed can be set such that the 'predicted' temperature, $T_3\_calc$, is 104 °C.

As will be appreciated, it is not possible to measure or calculate the over-allowance of energy input from the measurement of the temperature using the third thermistor 58, because even if a very large over-allowance of energy is input into the water flowing through the heater, the third thermistor 58 will only ever measure a maximum of 100 °C (or whatever the local boiling point of water is). Therefore the over-allowance of energy can be controlled, i.e. by increasing the pump speed if the over-allowance of energy is too large and vice-versa, so that an excessive amount of steam is not generated ("over-boil") which could lead to back-pressure in the flow channels 4, 5, while still ensuring that the water is effectively boiling when dispensed.

The third thermistor 58, however, can be used to measure whether the water has reached its target temperature of boiling, so that it is not dispensed cooler than boiling ("under-boil"). If the temperature measured by the third thermistor 58 is below a certain threshold, e.g. 98 °C, the speed of the pump 52 can be decreased to increase the output temperature. Clearly, the determination of the over-boil and the under-boil can be used together to optimise the temperature at which the water is dispensed and the efficiency at which the flow heater is operated.

When the required volume of hot water has been dispensed, any remaining water in the heating chamber 14 drains out of the outlet tube 22 via the slit 25 in the weir 23.

As scale builds up in the flow channels 4, 5, e. g. if the flow heater is used with hard water, the value of $T_{3\_calc}$ can be monitored to assess the level of scale build up. As scale builds up, the walls of the flow channels 4, 5 gradually become insulated from the heating element 2, and therefore the speed of the pump 52 needs to be reduced to ensure that the water reaches boiling before it is dispensed. Scale will generally build up more in the upper flow channel 5 because the water is hotter here, so the temperature as measured by the first thermistor 54 will increase. This will result in a higher calculated value for $T_{3\_calc}$. Once this has reached a threshold value, e.g. 118 °C, reducing the pump speed will no longer be effective in ensuring that the dispensed water temperature is boiling, i.e. owing to the amount of scale deposition in the flow channels 4, 5. This is therefore an indication that descaling of the flow heater needs to be performed. A suitable warning can be given to the user via the user interface.

In an alternative embodiment of the flow heater, as shown schematically in Fig. 7, no final heating chamber is provided, although the remainder of the flow heater is the same as shown in the previous Figures. In this embodiment the heated water is dispensed directly from the outlet 112 of the upper channel 105, and the third thermistor 158 projects through the wall of the upper channel 105 just upstream of the outlet 112. The operation of the flow heater in this embodiment is the same as in the previous embodiment, except that water is not brought to boiling in the final heating chamber. Nevertheless, the water temperature at the outlet 112 and the volume of water dispensed can be controlled using the three thermistors 154, 156, 158 in the same way as in the previous embodiment.

It will be appreciated by those skilled in the art that many variations and modifications to the embodiments described above may be made within the scope of the various aspects of the invention set out herein. For example, the thermistors do not need to be placed at the exact positions shown, i.e. either side of the flow channels which come into contact with the heating element, they could be provided at any suitable points along the flow heater, as long as they separated by a portion of the heating element so to give an indication of the temperature rise between the two points so that this can extrapolated to give the predicted output temperature or dispense volume.

**Claims**

1. A flow heater apparatus (1) for heating liquid as it flows therethrough comprising: a liquid source (50); a conduit (4, 5) for conveying liquid from the liquid source towards an outlet (22), said conduit comprising sequentially at least a first zone (4) and a second zone (5); heating means (2) for heating liquid in said conduit; and control means (52) for controlling the rate of flow of fluid through said conduit, said control means being in data communication with a first temperature sensor (54) responsive to a temperature of the liquid in the conduit at a point between said first and second zones, a second temperature sensor (56) responsive to a temperature of the liquid upstream of said first temperature sensor, **characterized in that** the flow heater apparatus comprises a third temperature sensor (58) responsive to a temperature of the liquid downstream of said first temperature sensor.

2. A flow heater apparatus as claimed in claim 1, arranged to calculate a flow rate of liquid therethrough using the difference between the temperatures sensed by the first and second temperature sensors (54, 56) respectively and to dispense a predetermined volume of heated liquid using the calculated flow rate.

3. A flow heater apparatus as claimed in claim 1 or 2, arranged to use the difference between the temperatures sensed by the first and second temperature sensors (54, 56) respectively to predict what the temperature sensed by the third temperature sensor (58) should be based on a knowledge of the heating power provided between the locations sensed by the first and third temperature sensors respectively.

4. A flow heater apparatus as claimed in claim 3, wherein a threshold predicted temperature is set, above which a scale warning is given.

5. A flow heater apparatus as claimed in any preceding claim, wherein the third temperature sensor (58) is arranged to sense the temperature of the liquid as it leaves the outlet (22).

6. A flow heater apparatus as claimed in any preceding claim, wherein the liquid source comprises a reservoir (50).

7. A flow heater apparatus as claimed in claim 6, wherein the second temperature sensor (56) is arranged to sense the temperature of the liquid in the reservoir (50) from which liquid is drawn before it is heated by the heating means (2).

8. A flow heater apparatus as claimed in any preceding claim, wherein liquid is made to flow through the conduit (4, 5) by means of a pump (52).

9. A flow heater apparatus as claimed in claim 8, wherein the flow rate control is exercised by controlling the speed of the pump (52).

**10.** A flow heater apparatus as claimed in any preceding claim, arranged to heat the liquid to boiling.

**11.** A flow heater apparatus as claimed any preceding claim, wherein the heating means comprises a sheathed heating element (2) bonded to the outside of the conduit.

**12.** A flow heater apparatus as claimed in claim 11, wherein the heating element (2) is bonded on two sides thereof to respective portions of the conduit (4, 5).

**13.** A flow heater apparatus as claimed in claim 12, wherein the respective portions of the conduit (4, 5) correspond to the first and second zones.

**14.** A flow heater apparatus as claimed in any preceding claim, wherein the temperature sensors (54, 56, 58) comprise thermistors.

**15.** A flow heater apparatus as claimed in any preceding claim, comprising a zone (16) between the conduit (4, 5) and the outlet (22) which provides for a separate escape path for steam (18).

**Patentansprüche**

**1.** Durchlauferhitzervorrichtung (1) zum Erwärmen einer Flüssigkeit, wenn diese durch sie hindurchfließt, wobei die Vorrichtung umfasst: eine Flüssigkeitsquelle (50); eine Leitung (4,5) zum Transportieren der Flüssigkeit von der Flüssigkeitsquelle in Richtung eines Auslasses (22), wobei die Leitung hintereinander mindestens eine erste Zone (4) und eine zweite Zone (5) umfasst; Mittel (2) zum Erwärmen, um die Flüssigkeit in der Leitung zu erwärmen; und Steuermittel (52), um den Durchfluss des Fluids durch die Leitung zu steuern, wobei die Steuermittel mit einem ersten Temperatursensor (54), der auf eine Temperatur der Flüssigkeit in der Leitung an einem Punkt zwischen der ersten Zone und der zweiten Zone reagieren kann, und mit einem zweiten Temperatursensor (56), der auf eine Temperatur der Flüssigkeit stromaufwärts des ersten Temperatursensors reagieren kann, in einer Datenkommunikation stehen, **dadurch gekennzeichnet, dass** die Durchlauferhitzervorrichtung einen dritten Temperatursensor (58) umfasst, der auf eine Temperatur der Flüssigkeit stromabwärts des ersten Temperatursensors reagieren kann.

**2.** Durchlauferhitzervorrichtung nach Anspruch 1, die angeordnet ist, um einen Durchfluss einer Flüssigkeit dort hindurch unter Verwendung des Temperaturunterschieds zwischen der Temperatur, die von dem ersten bzw. von dem zweiten Temperatursensor (54,56) erfasst wird, zu berechnen und um ein vorgegebenes Volumen einer erwärmten Flüssigkeit unter Verwendung des berechneten Durchflusses abzugeben.

**3.** Durchlauferhitzervorrichtung nach Anspruch 1 oder 2, die angeordnet ist, um den Temperaturunterschied zwischen der Temperatur, die von dem ersten bzw. von dem zweiten Temperatursensor (54,56) erfasst wird, zu verwenden, um vorherzusagen, welche der Temperatur, die von dem dritten Temperatursensor (58) erfasst wird, auf der Grundlage einer Kenntnis der Heizleistung basieren sollte, die zwischen den Orten, die von dem ersten bzw. von dem dritten Temperatursensor erfasst werden, bereitgestellt wird.

**4.** Durchlauferhitzervorrichtung nach Anspruch 3, wobei eine von einem Schwellenwert vorhergesagte Temperatur festgesetzt ist, oberhalb derer eine Skalenwarnung gegeben wird.

**5.** Durchlauferhitzervorrichtung nach einem vorhergehenden Anspruch, wobei der dritte Temperatursensor (58) angeordnet ist, um die Temperatur der Flüssigkeit zu erfassen, wenn diese den Auslass (22) verlässt.

**6.** Durchlauferhitzervorrichtung nach einem vorhergehenden Anspruch, wobei die Flüssigkeitsquelle ein Reservoir (50) umfasst.

**7.** Durchlauferhitzervorrichtung nach Anspruch 6, wobei der zweite Temperatursensor (56) angeordnet ist, um die Temperatur der Flüssigkeit in dem Reservoir (50) zu erfassen, aus dem sie abgeflossen ist, bevor sie durch die Mittel (2) zum Erwärmen erwärmt wird.

**8.** Durchlauferhitzervorrichtung nach einem vorhergehenden Anspruch, wobei die Flüssigkeit hergestellt ist, um mittels einer Pumpe (52) durch die Leitung (4,5) zu fließen.

**9.** Durchlauferhitzervorrichtung nach Anspruch 8, wobei die Durchflusssteuerung ausgeübt wird, indem die Geschwindigkeit der Pumpe (52) gesteuert wird.

**10.** Durchlauferhitzervorrichtung nach einem vorhergehenden Anspruch, die angeordnet ist, um die Flüssigkeit bis zum Kochen zu erwärmen.

**11.** Durchlauferhitzervorrichtung nach einem vorhergehenden Anspruch, wobei die Mittel zum Erwärmen ein beschichtetes Heizelement (2) umfassen, das an die Außenseite der Leitung gebunden ist.

**12.** Durchlauferhitzervorrichtung nach Anspruch 11, wobei das Heizelement (2) auf zwei Seiten desselben an die jeweiligen Abschnitte der Leitung (4,5) gebunden ist.

**13.** Durchlauferhitzervorrichtung nach Anspruch 12, wobei die jeweiligen Abschnitte der Leitung (4,5) der ersten und der zweiten Zone entsprechen.

**14.** Durchlauferhitzervorrichtung nach einem vorhergehenden Anspruch, wobei die Temperatursensoren (54,56,58) Thermistoren umfassen.

**15.** Durchlauferhitzervorrichtung nach einem vorhergehenden Anspruch, die eine Zone (16) zwischen der Leitung (4,5) und dem Auslass (22) umfasst, die einen getrennten Ausgangsweg für Dampf (18) vorsieht.

## Revendications

**1.** Appareil de chauffage en continu (1) pour chauffer un liquide à mesure que celui-ci le traverse, comprenant : une source de liquide (50) ; un conduit (4, 5) pour acheminer le liquide de la source de liquide vers une sortie (22), ledit conduit comprenant en séquence au moins une première zone (4) et une seconde zone (5) ; des moyens de chauffage (2) pour chauffer le liquide dans ledit conduit et des moyens de commande (52) pour commande le débit d'écoulement de fluide à travers ledit conduit, lesdits moyens de commande étant en communication de données avec un premier capteur de température (54) sensible à la température du liquide dans le conduit en un point entre lesdites première et seconde zones, un deuxième capteur de température (56) sensible à la température du liquide en amont dudit premier capteur de température, **caractérisé en ce que** l'appareil de chauffage en continu comprend un troisième capteur de température (58) sensible à la température du liquide en aval dudit premier capteur de température.

**2.** Appareil de chauffage en continu selon la revendication 1, aménagé pour calculer le débit de liquide qui le traverse en utilisant la différence entre les températures détectées par les premier et deuxième capteurs de température (54, 56), respectivement, et distribuer un volume prédéterminé de liquide chauffé en utilisant le débit calculé.

**3.** Appareil de chauffage en continu selon la revendication 1 ou la revendication 2, aménagé pour utiliser la différence entre les températures détectées par les premier et deuxième capteurs de température (54, 56), respectivement, pour prédire ce que la température détectée par le troisième capteur de température (58) doit être sur la base de la connaissance du pouvoir chauffant fourni entre les emplacements détectés par les premier et troisième capteurs de température, respectivement.

**4.** Appareil de chauffage en continu selon la revendication 3, dans lequel est réglée une température de seuil prédite au-dessus de laquelle un avertissement d'échelle est délivré.

**5.** Appareil de chauffage en continu selon l'une quelconque des revendications précédentes, dans lequel le troisième capteur de température (58) est aménagé pour détecter la température du liquide lorsqu'il quitte la sortie (22).

**6.** Appareil de chauffage en continu selon l'une quelconque des revendications précédentes, dans lequel la source de liquide comprend un réservoir (50).

**7.** Appareil de chauffage en continu selon la revendication 6, dans lequel le deuxième capteur de température (56) est aménagé pour détecter la température du liquide dans le réservoir (50) d'où le liquide est aspiré avant d'être chauffé par les moyens de chauffage (2).

**8.** Appareil de chauffage en continu selon l'une quelconque des revendications précédentes, dans lequel le liquide est amené à s'écouler à travers le conduit (4, 5) au moyen d'une pompe (52).

**9.** Appareil de chauffage en continu selon la revendication 8, dans lequel la commande de débit est exercée en commandant la vitesse de la pompe (52).

**10.** Appareil de chauffage en continu selon l'une quelconque des revendications précédentes, aménagé pour chauffer le liquide jusqu'à ébullition.

**11.** Appareil de chauffage en continu selon l'une quelconque des revendications précédentes, dans lequel les moyens de chauffage comprennent un élément de chauffage gainé (2) relié à l'extérieur du conduit.

**12.** Appareil de chauffage en continu selon la revendication 11, dans lequel l'élément de chauffage (2) est relié sur ses deux côtés à des parties respectives du conduit (4, 5).

**13.** Appareil de chauffage en continu selon la revendication 12, dans lequel les parties respectives du conduit (4, 5) correspondent aux première et seconde zones.

**14.** Appareil de chauffage en continu selon l'une quelconque des revendications précédentes, dans lequel les capteurs de température (54, 56, 58) comprennent des thermistors.

15. Appareil de chauffage en continu selon l'une quelconque des revendications précédentes, comprenant une zone (16) entre le conduit (4, 5) et la sortie (22) qui fournit un trajet d'échappement séparé pour la vapeur d'eau (18).

Fig. 1

# Fig. 2

EP 2 768 359 B1

# Fig. 3

EP 2 768 359 B1

Fig. 4

# Fig. 5

EP 2 768 359 B1

# Fig. 6

# Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0771542 A
- WO 2010106349 A
- WO 2010106348 A
- WO 2011077135 A